# EUROPÄISCHE PATENTSCHRIFT

(11) **EP 1 680 895 B1**
(45) Veröffentlichungstag und Bekanntmachung des Hinweises auf die Patenterteilung: **10.01.2007**
(21) Anmeldenummer: 04761056.3
(22) Anmeldetag: 01.10.2004
(51) Int. Cl.: H04L 12/40

(54) **ANLAGE ZUM ÜBERTRAGEN VON DATEN IN EINEM SERIELLEN, BIDIREKTIONALEN BUS**
UNIT OF THE TRANSMISSION OF DATA IN A SERIAL BIDIRECTIONAL BUS
SYSTEME DE TRANSMISSION DE DONNEES DANS UN BUS SERIEL BIDIRECTIONNEL

(30) Priorität: 03.10.2003 AT 15692003
(43) Veröffentlichungstag der Anmeldung: 19.07.2006
(73) Patentinhaber: Bernecker+Rainer Industrie-Elektronik Gesellschaft Mbh, 5142 Eggelsberg 120 (AT)
(72) Erfinder: RAINER, Josef, A-5133 Franking (AT); BERNECKER, Erwin, A-5122 Hochburg (AT)
(74) Vertreter: Hübscher, Helmut
(86) Internationale Anmeldenummer: PCT/AT2004/000334
(87) Internationale Veröffentlichungsnummer: WO 2005/034439

(56) Entgegenhaltungen:
- EP-A- 1 223 710
- GB-A- 2 350 985
- US-A- 5 001 755
- US-A- 5 434 861

## Beschreibung

### Technisches Gebiet

Die Erfindung bezieht sich auf eine Anlage zum Übertragen von Daten in einem seriellen, bidirektionalen Bus mit einem Steuergerät, das eine Sende- und Empfangseinheit für zu einem Datenrahmen zusammengefaßte Datenfelder aufweist, und mit Busteilnehmern, die eine Auswerteschaltung zum Ein- und Auslesen von Datenfeldern in Datenrahmen besitzen, wobei zumindest der Busteilnehmer an dem dem Steuergerät gegenüberliegenden Busende eine Sendeeinrichtung für einen Datenrahmen aufweist.

### Stand der Technik

Um die Datenübertragung bei Anlagen zum Übertragen von Daten in einem seriellen, bidirektionalen Bus synchronisieren zu können, ist es bekannt (PCT/AT03/0001), von einem Steuergerät aus an alle Busteilnehmer ein Steuersignal zu versenden. Anschließend an dieses Steuersignal wird dann die Datenübertragung mit einer Übertragung an das Steuergerät eröffnet, und zwar in dem der Busteilnehmer am Busende über den seriellen, bidirektionalen Bus einen Datenrahmen in Richtung des Steuergeräts versendet. Dieser Datenrahmen besteht zunächst nur aus dem Datenfeld des Busteilnehmers am Busende und wächst in Richtung des Steuergeräts in seiner Größe an, da die anderen Busteilnehmer an das Ende dieses Datenrahmens mit Hilfe einer Auswerteschaltung ihre eigenen Datenfelder anhängen. Es hat sich jedoch herausgestellt, daß in verschiedensten Fällen, insbesondere bei geringen Störabständen in der Signalübertragung oder auch bei großen Abständen zwischen den Busteilnehmern, die für die Datenübertragung notwendige Auswerteschaltung vergleichsweise konstruktiv aufwendig ist. Insbesondere weil von den jeweiligen Auswerteschaltungen vor allem vermieden werden muß, daß Abstände zwischen den Datenfeldern beim Einfügen der betreffenden Datenfeldern entstehen. Hinzu kommt, daß von den Auswerteschaltungen oftmals das Ende des jeweiligen Datenrahmens zum Anhängen der eigenen Datenfelder nicht richtig erkannt wird, so daß mit fehlerhafter Datenübertragung gerechnet werden muß. Eine Wiederholung der Datenübertragung verringert aber auf negative Weise die Datenübertragungsrate, die außerdem durch den zu versendenden Steuerimpuls beschränkt wird.

In der Druckschrift GB 2 350 985 A wird ein System vorgestellt das eine Steuereinheit mit Sende- und Empfangseinheit beinhaltet, an das über einen Bus zumindest ein Teilnehme angeschlossen ist, der Datenrahmen empfängt und auswertet, wie auch senden kann.

### Darstellung der Erfindung

Der Erfindung liegt somit die Aufgabe zugrunde, eine Anlage zur Datenübertragung in einem seriellen, bidirektionalen Bus der eingangs beschriebenen Art so auszugestalten, daß sich die Anlage nicht nur durch die Einfachheit der Datenübertragung sondern auch durch ihren geringen Konstruktionsaufwand auszeichnet. Außerdem soll eine hohe Datenübertragungsrate sichergestellt werden können.

Die Erfindung löst die gestellte Aufgabe dadurch, daß wenigstens der Busteilnehmer am Busende eine durch einen empfangenen Datenrahmen beaufschlagbare Steuerstufe aufweist, die die Sendeeinrichtung in Abhängigkeit vom Empfang eines Datenrahmens im Sinne des Versendens eines Datenrahmens für zumindest die Datenfelder der Busteilnehmer ansteuert.

Mit dem Vorsehen einer Synchronisation der Busteilnehmer über einen empfangenen Datenrahmen, kann nicht nur im Gegensatz zum Stand der Technik auf Steuersignale verzichtet werden, sondern es ist auch auf einfache Weise den betreffenden Busteilnehmern mitzuteilen, wann der bidirektionale Bus für die eigene Datenübertragung verwendet werden darf. Für solch eine Datenübertragung weist zumindest der Busteilnehmer am Busende eine durch den empfangenen Datenrahmen beaufschlagbare Steuerstufe auf, die die Sendeeinrichtung in Abhängigkeit vom Empfang des Datenrahmens im Sinne des Versendens eines Datenrahmens für zumindest die Datenfelder der Busteilnehmer ansteuert. Die jeweiligen anderen Busteilnehmer können dann ihre eigenen Datenfelder in diesen Datenrahmen eintragen, und zwar in einen für sie jeweils vorbestimmten Bereich, ohne daß gegenüber dem Stand der Technik mit konstruktiv aufwendigen Maßnahmen ein lückenloses Anhängen der Datenfelder an das Ende eines Datenrahmens gewährleistet werden muß. Die erfindungsgemäße Anlage ist daher vergleichsweise einfach zu realisieren und bietet auch eine hohe Sicherheit in der Datenübertragung Außerdem kann gegenüber dem Stand der Technik eine höhere Datenübertragungsrate gewährleistet werden, da kein Steuersignale benötigt werden.

Weist jeder Busteilnehmer eine Steuerstufe für eine Sendeeinrichtung zum Versenden eines Datenrahmens für die eigenen und die Datenfelder der Busteilnehmer auf, die zwischen dem Steuergerät und dem jeweiligen Busteilnehmer liegen, so kann ein Busteilnehmer ausfallen und trotzdem eine beschränkte Datenübertragung aufrecht gehalten werden. Es muß ja nur der dem ausgefallenen Busteilnehmer unmittelbar vorgeordnete Busteilnehmer einen den Anforderungen der in diesem verkürzten Bus verbleibenden Busteilnehmer entsprechenden Datenrahmen erstellen und versenden. Somit kann trotz eines Ausfallens eines Busteilnehmers ein Teilbetrieb des seriellen Busses aufrecht gehalten werden.

Besitzen die Busteilnehmer einen Speicher für die Position der über die Auswerteschaltung ein- und auslesbaren Datenfelder innerhalb der jeweiligen Datenrahmen, so ist es nicht nur möglich bei vor Betriebnahme der Anlage die Reihenfolge der auf die Busteilnehmer bezogenen Datenfelder im Datenrahmen frei zu wählen, sondern es kann auch während des Betriebs der Anlage die Position der Datenfelder verändert werden. Diese neue Position muß ja nur in den Speicher des jeweiligen Busteilnehmers abgelegt werden, womit auch beispielsweise im Gegensatz zum Stand der Technik die Reihenfolge der Datenfelder nach ihrer Dringlichkeit gewählt werden kann. Desweiteren ist es auch vorstellbar, daß bei einem Hinzufügen oder Entfernen eines Busteilnehmers die Positionen der Datenfelder verändert werden müssen, was wiederum sehr einfach über die Positionsdaten im Speicher der Busteilnehmer möglich ist.

Damit der Vergabeaufwand im Hinblick auf die Position der Datenfelder in einem Datenrahmen vereinfacht werden kann, weist das Steuergerät eine Vergabestufe für die Position der einzelnen Busteilnehmer zuordbaren Datenfelder innerhalb eines Datenrahmens auf. Diese vergebene Position wird dann den jeweiligen Busteilnehmern über den Bus mitgeteilt, so daß damit eine vergleichsweise einfach anzupassende Konstruktion gegeben ist. Zu diesem Zweck weist das Steuergerät eine Initialisierungseinrichtung zum Auslesen der Positionsdaten in an die einzelnen Busteilnehmer adressierte Datenfelder auf, wobei dann die Busteilnehmer mit einer Initialisierungsschaltung die adressenbezogenen Positionsdaten aus den adressierten Datenfeldern in den Speicher für diese Positionsdaten auslesen.

Mit einer Prüfschaltung der Busteilnehmer können beispielsweise elektrische Kenngrößen der an den Busteilnehmer angeschlossenen Verbindungsleitungen gemessen werden, womit es jedem Busteilnehmer möglich ist festzustellen, ob ein angeschlossener weitere Busteilnehmer vorliegt.

Aufgrund eines Erstellens von Prüfungsdaten aus den Datenrahmen können auf einfache Weise Fehler in der Datenübertragung erkannt werden. Dafür weisen bekanntermaßen die Busteilnehmer je eine Kodiereinrichtung auf, die aus den Datenrahmen Prüfungsdaten erstellen, welche Prüfungsdaten dann mit dem jeweiligen Datenrahmen versandt werden. Wird nun ein solcher Datenrahmen mit Prüfungsdaten empfangen, so muß lediglich mit einer Überprüfungseinrichtung die Richtigkeit der Prüfungsdaten festgestellt werden. Wird aber ein Fehler in der Datenübertragung erkannt, so kann dies beispielsweise mit einer Anforderung für ein erneutes Versenden eines Datenrahmens korrigiert werden.

Mit dem Vorgeben von Adressen für die einzelnen Busteilnehmer ist es dem Steuergerät möglich, besondere Datenrahmen zu erstellen. Diese Datenrahmen können zur Initialisierung der Anlage dienen, da in diesem Fall den Busteilnehmern busspezifische Daten, beispielsweise ihre Position der Datenfelder in den Datenrahmen, mitzuteilen sind. Diese nunmehr mit Adressen versehenen Datenrahmen können auch vom Steuergerät in einem vom üblichen Übertragungszyklus nicht benötigten Zeitfenster versendet werden, so daß adressierte Busteilnehmer bevorzugt mit Daten versorgt werden können. Somit sind die Übertragungszyklen für alle Busteilnehmer nicht notwendigerweise nach den höchsten Übertragungsraten auszulegen.

Kurze Beschreibung der Zeichnung

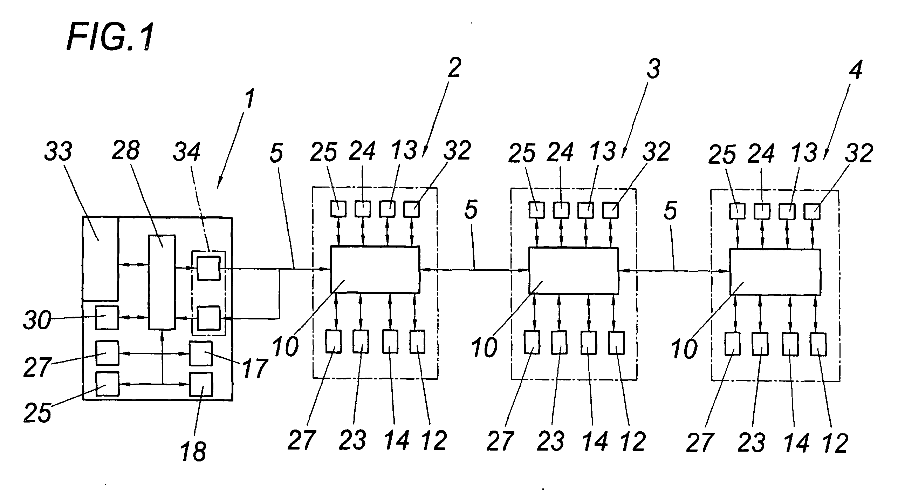

In den Zeichnungen ist der Erfindungsgegenstand beispielsweise dargestellt. Es zeigen
- Fig. 1: eine erfindungsgemäße Anlage zur Datenübertragung in einem seriellen Bus in einem Blockschaltbild und
- Fig. 2: den zeitlichen Ablauf einer Datenübertragung im Bus nach der Fig.1.

### Weg zur Ausführung der Erfindung

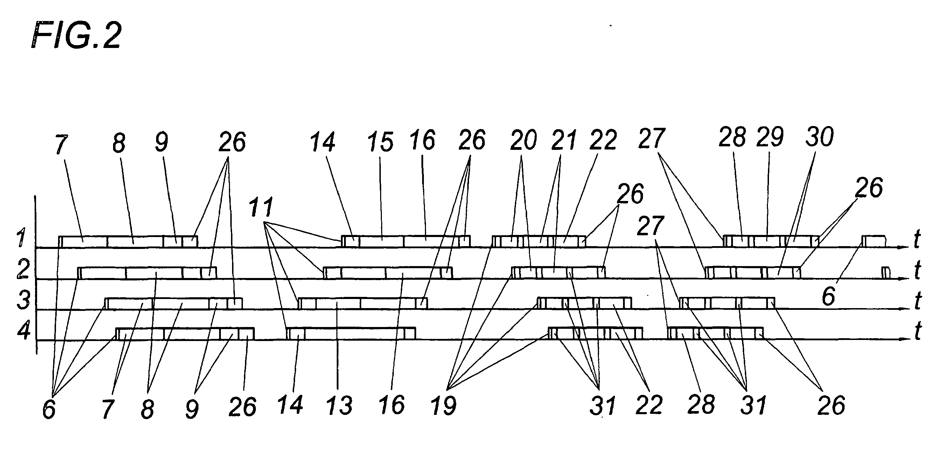

Gemäß dem dargestellten Ausführungsbeispiel besitzt der serielle Bus ein Steuergerät 1 und drei Busteilnehmer 2, 3, und 4, die über eine bidirektionale Leitung 5 miteinander verbunden sind. Eine Sende- und Empfangseinheit 34 des Steuergeräts 1 sendet an die Busteilnehmer 2, 3 und 4 entsprechend Fig. 2 einen Datenrahmen 6 mit Datenfelder 7, 8 und 9 für die Busteilnehmer 2, 3 und 4. Der Datenrahmen 6 wird zeitlich versetzt von den Busteilnehmern 2, 3 und 4 empfangen, woraus die Busteilnehmer 2, 3 und 4 ihre jeweiligen Datenfelder 7, 8 oder 9 über eine Auswertestufe 10 entnehmen, da den Busteilnehmern 2, 3 und 4 die jeweilige Position ihrer entweder ein- oder auszulesenden Datenfelder 7, 8, 9, 14, 15 bzw. 16 der Datenrahmen 6, 11 bekannt ist. Wird nun ein Datenrahmen 6 vom Busteilnehmer 4 am dem Steuergerät 1 gegenüberliegenden Ende des bidirektionalen, seriellen Busses empfangen, so versendet dieser Busteilnehmer 4 ein Datenrahmen 11 über seine Sendeeinrichtung 12 in Richtung des Steuergeräts 1. Hiefür weist der Busteilnehmer 4 am Busende eine durch einen empfangenen Datenrahmen 6 beaufschlagbare Steuerstufe 13 auf, die die Sendeeinrichtung 12 in der Abhängigkeit vom Empfang des Datenrahmens 6 im Sinne des Versendens eines Datenrahmens 11 beaufschlagt. Dieser Datenrahmen 11 kann zumindest die auszulesenden Datenfelder 14, 15 und 16 der Busteilnehmer 2, 3 und 4 aufnehmen, so daß sich auch mit einem Einfügen der Datenfelder 15 und 16 der Datenrahmen 11 in seiner Größe nicht ändert. Ein solches Einfügen ist wiederum in bekannter Weise mit der Auswerteschaltung 10 der jeweiligen Busteilnehmer 2 und 3 durchführbar.

Jeder Busteilnehmer 2, 3 und 4 besitzt eine Steuerstufe 13 für eine Sendeeinrichtung 12 zum Versenden eines Datenrahmens 11 für die eigenen und die Datenfelder der vorgeordneten Busteilnehmer, damit bei einem Ausfallen eines Busteilnehmers 3 oder 4 eine Datenübertragung zumindest teilweise möglich ist. In solch einem Fall sendet dann der unmittelbar vor dem ausgefallenen Busteilnehmer 3 oder 4 liegende Busteilnehmer 2 oder 3 einen entsprechenden Datenrahmen an das Steuergerät 1.

Um Position der ein- und auszulesenden Datenfelder 7, 8, 9, 14, 15 bzw. 16 in den Datenrahmen 6, 11 zu verändern, sind die jeweiligen Positionsdaten in einem Speicher 14 der jeweiligen Busteilnehmer 2, 3 oder 4 abgelegt. Für ein Auslesen der entsprechenden Datenfelder 7, 8 oder 9 aus einem Datenrahmen greift die jeweilige Auswerteschaltung 10 vorher auf diese Positionsdaten im Speicher 14 zu. Somit kennt, in gleicher Weise wie beim Einlesen der Datenfelder 7, 8 oder 9, die jeweilige Auswerteschaltung 10 bei einem Auslesen der Datenfelder 14, 15 oder 16 die zugeordnete Position im Datenrahmen 11.

Desweiteren besitzt das Steuergerät 1 eine Vergabestufe 17 für die Position der den einzelnen Busteilnehmern 2, 3 und 4 zuordbaren Datenfelder 7, 8, 9, 14, 15 und 16 in den Datenrahmen 6 bzw. 11. Diese Position wird von einer Initialisierungseinrichtung 18 des Steuergeräts 1 in einen Datenrahmen 19 mit an die einzelnen Busteilnehmer 2, 3 oder 4 adressierte Datenfelder 20, 21 und 22 eingelesen und von der Sende- und Empfangseinrichtung 34 an die Busteilnehmer 2, 3 und 4 versandt. Die Busteilnehmer 2, 3 und 4 entnehmen aus diesem Datenrahmen 19 mit ihrer Initialisierungsschaltung 23 diese Positionsdaten und lesen diese in den Speicher 14 ein.

Jeder Busteilnehmer 2, 3 und 4 weist eine Prüfschaltung 24 zum Erkennen eines an den Bus 5 angeschlossenen und nachgeordneten Busteilnehmers 2 bzw. 3 auf. Damit kann jeder Busteilnehmer 2, 3 und 4 beispielsweise feststellen, ob er sich am Busende befindet.

Um Fehler in der Datenübertragung zu erkennen, erstellt eine Kodiereinrichtung 25 des Steuergeräts 1 von jedem zu versendenden Datenrahmen 6 und 19 Prüfungsdaten 26, die mit dem Datenrahmen 6 und 19 versandt werden. Eine Überprüfungseinrichtung 27 der Busteilnehmer 2, 3 oder 4 erlaubt der Auswertestufe 10 ein Ein- und Auslesen der jeweiligen Datenfelder 7, 8, 9, 20, 21 oder 22, falls diese fehlerfrei übertragen wurden. Werden die Datenrahmen 11 oder 27 mit von den Busteilnehmern 2, 3 oder 4 einzulesenden Datenfeldern 14, 15, 16, 28, 29 oder 30 ergänzt, so ersetzt die Kodiereinrichtung 25 des jeweiligen Busteilnehmers 2, 3 oder 4 die empfangenen Prüfungsdaten 26 durch neue Prüfungsdaten 26, die aus dem in seinen Daten veränderten Datenrahmen 11 oder 27 gebildet werden. Die neuen Prüfungsdaten 26 werden beispielsweise am Ende des Datenrahmens 11 oder 27 angehängt. Zusätzlich weist auch das Steuergerät 1 eine Überprüfungseinrichtung 27 auf, um der Recheneinheit 28 nur nach erfolgreicher Überprüfung der empfangenen Prüfungsdaten 26 ein Auslesen der empfangenen Datenrahmen 11 oder 27 zu erlauben.

Das Steuergerät 1 weist einen mit der Recheneinheit 28 verbundenen Adressenspeicher 30 für Adressen 31 der Busteilnehmer 2, 3 und 4 auf. In einer vorteilhaften Ausgestaltung kann das Steuergerät 1 Datenfelder 19, 26 mit Adressen 31 der jeweiligen Busteilnehmer 2, 3 oder 4 versehen, um so die Busteilnehmer 2, 3 und 4 mit busspezifischen Daten, beispielsweise auch Initialisierungsdaten, zu versorgen. Die Datenrahmen für diese übermittelbaren Datenfelder sind in der Fig. 2 mit 19 und 27 bezeichnet. Eine Erkennungsschaltung 32 jedes Busteilnehmers 2, 3 oder 4 erlaubt seiner jeweiligen Auswertestufe 10 ein Auslesen des Datenfeldes 20, 21 oder 22 bei übereinstimmender Adresse 31. Die Sendeeinrichtung 12 des Busteilnehmers 4 am Busende, sendet einen Datenrahmen 27 für sein eigenes Datenfeld 28 und für die Datenfelder 29 und 30 der vorgeordneten Busteilnehmer 2 und 3 in Richtung des Steuergeräts 1 zurück, wobei die Datenfelder 29 und 30 mit Adressen 31 versehen sind. Die Erkennungsschaltungen 32 der anderen Busteilnehmer 2 und 3 erlaubt dann den jeweiligen Auswertestufen 10 das Ergänzen des Datenrahmens 27 um das auszulesende und bereits mit einer Adresse 31 versehene Datenfeld 29 bzw. 30.

Ein neuer Übertragungszyklus wird mit einem erneuten Versenden eines Datenrahmens 6 vom Steuergerät 1 begonnen, welcher Zeitpunkt vom Steuergerät nach dem Empfangen des Datenrahmens 11 vom Busteilnehmer 4 am Busende frei gewählt werden kann. Desweiteren besitzt das Steuergerät 1 eine mit der Recheneinheit 28 verbundene Schnittstelle 33, über die auf die Anlage mit anderen Anlagen verbunden werden kann.

## Patentansprüche

1. Anlage zum Übertragen von Daten in einem seriellen, bidirektionalen Bus (5) mit einem Steuergerät (1), das eine Sende- und Empfangseinheit (34) für zu einem Datenrahmen (11) zusammengefaßte Datenfelder (14, 15, 16) aufweist, und mit Busteilnehmern (2, 3, 4), die eine Auswerteschaltung (10) zum Ein- und Auslesen von Datenfeldern (14, 15, 16) in Datenrahmen (11) besitzen, wobei zumindest der Busteilnehmer (4) an dem dem Steuergerät gegenüberliegenden Busende eine Sendeeinrichtung (12) für einen Datenrahmen aufweist, **dadurch gekennzeichnet, daß** wenigstens der Busteilnehmer (4) am Busende eine durch einen empfangenen Datenrahmen (11) beaufschlagbare Steuerstufe (13) aufweist, die die Sendeeinrichtung (12) in Abhängigkeit vom Empfang eines Datenrahmens (11) im Sinne des Versendens eines Datenrahmens (11) für zumindest die Datenfelder (14, 15 und 16) der Busteilnehmer (2, 3 und 4) ansteuert.

2. Anlage nach Anspruch 1, **dadurch gekennzeichnet, daß** jeder Busteilnehmer (2, 3, 4) eine Steuerstufe (13) für eine Sendeeinrichtung (12) zum Versenden eines Datenrahmens (11) für die eigenen und die Datenfelder (14, 15, 16) der Busteilnehmer (2, 3, 4) besitzt, die zwischen dem Steuergerät (1) und dem jeweiligen Busteilnehmer (2, 3, 4) liegen.

3. Anlage nach Anspruch 1 oder 2, **dadurch gekennzeichnet, daß** die Busteilnehmer (2, 3 und 4) einen Speicher (14) für die Position der über die Auswerteschaltung (10) ein- und auslesbaren Datenfelder (7, 8, 9, 14, 15 und 16) innerhalb der jeweiligen Datenrahmen (6, 11) aufweisen.

4. Anlage nach Anspruch 3, **dadurch gekennzeichnet, daß** das Steuergerät (1) eine Vergabestufe (17) für die Position der den einzelnen Busteilnehmer (2, 3 und 4) zuordbaren Datenfelder (7, 8, 9, 14, 15 und 16) innerhalb eines Datenrahmens (6 oder 11) und eine Initialisierungseinrichtung (18) zum Auslesen der Positionsdaten in an die einzelnen Busteilnehmer (2, 3, 4) adressierte Datenfelder eines Datenrahmens aufweist und daß die Busteilnehmer (2, 3 und 4) eine Initialisierungsschaltung (23) zum adressenbezogenen Auslesen der Positionsdaten aus den adressierten Datenfeldern des Datenrahmens in den Speicher (14) für diese Positionsdaten umfassen.

5. Anlage nach einem der Ansprüche 1 bis 4, **dadurch gekennzeichnet, daß** jeder Busteilnehmer (2, 3 und 4) eine Prüfschaltung (24) zum Erkennen eines an den Bus (5) angeschlossenen und nachgeordneten Busteilnehmers (3 und 4) besitzt.

6. Anlage nach einem der Ansprüche 1 bis 5, **dadurch gekennzeichnet, daß** bekanntermaßen das Steuergerät (1) und die Busteilnehmern (2, 3 und 4) je eine Kodiereinrichtung (25) zum Erstellen von Prüfungsdaten (16) aus Datenrahmen (6 und 11) besitzen und daß bekanntermaßen das Steuergerät (1) und die Busteilnehmer (2, 3 und 4) je eine Überprüfungseinrichtung (27) für mit den Datenrahmen (6 bzw. 11) empfangene Prüfungsdaten aufweisen.

7. Anlage nach einem der Ansprüche 1 bis 6, **dadurch gekennzeichnet, daß** das Steuergerät (1) einen Adressenspeicher (30) für die Adressen (31) der Busteilnehmer (2, 3, 4) aufweist und daß jeder Busteilnehmer (2, 3 und 4) eine Erkennungsschaltung (32) zum Ansteuern der Auswerteschaltung (10) einerseits zum Auslesen des an den Busteilnehmer (2, 3 oder 4) adressierten Datenfeldes (20, 21 oder 22) im Datenrahmen (19) und andererseits zum Einlesen seines Datenfeldes (28, 29 oder 30) in den Datenrahmen (27) besitzt.

## Claims

1. System for transmitting data in a serial bidirectional bus (5) with a control device (1) which comprises a sending and receiving unit (34) for data fields (14, 15, 16) put together to form a data frame (11), and with bus subscribers (2, 3, 4) which have an evaluating circuit (10) for the reading-in and reading-out of data fields (14, 15, 16) in the data frame (11), whereby at least the bus subscriber (4) at the bus end lying opposite the control device comprises a sending device (12) for a data frame, **characterised in that** at least the bus subscriber (4) at the bus end comprises a control stage (13) which can be impacted by a received data frame (11) which controls the sending device (12) in dependence upon the receipt of a data frame (11) in the sense of the sending of a data frame (11) for at least the data fields (14, 15 and 16) of the bus subscribers (2, 3 and 4).

2. System according to claim 1, **characterised in that** each bus subscriber (2, 3, 4) has a control stage (13) for a sending device (12) for sending a data frame (11) for its own and the data fields (14, 15, 16) of the bus subscribers (2, 3, 4) which lie between the control device (1) and the respective bus subscriber (2, 3, 4).

3. System according to claim 1 or 2, **characterised in that** the bus subscribers (2, 3 and 4) comprise a memory (14) for the position of the data fields (7, 8, 9, 14, 15 and 16) within the respective data frame (11) which can be read in and out via the evaluating circuit (10).

4. System according to claim 3, **characterised in that** the control device (1) comprises an allocation stage (17) for the position of the data fields (7, 8, 9, 14, 15 and 16) within a data frame (6 or 11) to be assigned to the individual bus subscribers (2, 3 and 4) and an initialisation device (18) for reading out the position data in data fields of a data frame addressed to the individual bus subscribers (2, 3 and 4) and **in that** the bus subscribers (2, 3 and 4) comprise an initialisation circuit (23) for the address-related reading-out of the position data from the addressed data fields of the data frame into the memory (14) for these position data.

5. System according to one of the claims 1 to 4, **characterised in that** each bus subscriber (2, 3 and 4) has a verification circuit (24) for recognition of a bus subscriber (3 and 4) connected to the bus (5) and arranged after it.

6. System according to one of the claims 1 to 5, **characterised in that** in the known way the control device (1) and the bus subscribers (2, 3 and 4) each have a coding device (25) for formulating test data (16) from data frames (6 and 11) and **in that** in the known way the control device (1) and the bus subscribers (2, 3 and 4) comprise a respective verification device (27) for test data received with the data frame (6 or 11).

7. System according to one of the claims 1 to 6, **characterised in that** the control device (1) comprises an address memory (30) for the addresses (31) of the bus subscribers (2, 3, 4) and **in that** each bus subscriber (2, 3 and 4) has a recognition circuit (32) for controlling the evaluating circuit (10) on the one hand for reading out the data field (20, 21 or 22) in the data frame (19) addressed to the bus subscriber (2, 3 or 4) and on the other hand for reading in its data field (28, 29 or 30) into the data frame (27).

## Revendications

1. Système de transmission de données dans un bus (5) bidirectionnel sériel, avec un appareil de commande (1), présentant une unité d'émission et de réception (34) pour des champs de données (14, 15, 16) regroupés en une trame de données (11), et avec des abonnés au bus (2, 3, 4) disposant d'un circuit d'évaluation (10) pour enregistrer et lire des champs de données (14, 15, 16) dans la trame de données (11), sachant qu'au moins l'abonné au bus (4), situé à l'extrémité de bus opposée à l'appareil de commande, présente un dispositif émetteur (12) pour une trame de données, **caractérisé en ce qu'**au moins l'abonné au bus (4) situé à l'extrémité de bus présente un étage de commande (13) susceptible d'être sollicité par une trame de données (11) reçue, étage de commande commandant le dispositif d'émission (12) en fonction de la réception d'une trame de données (11) dans le sens d'un envoi d'une trame de données (11), pour au moins les champs de données (14, 15 et 16) des abonnés au bus (2, 3 et 4).

2. Système selon la revendication 1, **caractérisé en ce que** chaque abonné au bus (2, 3, 4) comprend un étage de commande (13) pour un dispositif émetteur (12), pour l'envoi d'une trame de données (11) contenant les champs de données propres et les champs de données (14, 15, 16) des abonnés au bus (2, 3, 4), se faisant entre l'appareil de commande (1) et l'abonné au bus (2, 3, 4) respectif.

3. Système selon la revendication 1 ou 2, **caractérisé en ce que** les abonnés au bus (2, 3, 4) présentent une mémoire (14) pour la position, à l'intérieur des trames de données (6, 11) respectives, des champs de données (7, 8, 9, 14, 15 et 16) pouvant être enregistrés et lus par l'intermédiaire du circuit d'évaluation (10).

4. Système selon la revendication 3, **caractérisé en ce que** l'appareil de commande (1) présente un étage d'affectation (17), pour la position des champs de données (7, 8, 9, 14, 15 et 16) susceptibles d'être associés aux différents abonnés au bus (2, 3 et 4), à l'intérieur d'une trame de données (6 ou 11), et un dispositif d'initialisation (18), pour la lecture des données de position dans des champs de données, ayant été adressés aux différents abonnés au bus (2, 3, 4), d'une trame de données, et **en ce que** les abonnés au bus (2, 3, 4) comprennent un circuit d'initialisation (23) pour la lecture, se référant à l'adresse, des données de position, à partir des champs de données adressés de la trame de données dans la mémoire (14) prévue pour ces données de position.

5. Système selon l'une des revendications 1 à 4, **caractérisé en ce que** chaque abonné au bus (2, 3 et 4) comprend un circuit de contrôle (24), pour identifier un abonné au bus (3 et 4) raccordé au bus (5) et situé en position aval.

6. Système selon l'une des revendications 1 à 5, **caractérisé en ce que**, comme ceci est connu, l'appareil de commande (1) et les abonnés au bus (2, 3 et 4) comprennent chacun un dispositif de codage (25) pour établir des données de contrôle (16) à partir des trames de données (6 et 11), et **en ce que**, comme ceci est connu, l'appareil de commande (1) et les abonnés au bus (2, 3 et 4) présentent chacun un dispositif de vérification (27), pour des données de contrôle ayant été reçues avec les trames de données (6 ou 11).

7. Système selon l'une des revendications 1 à 6, **caractérisé en ce que** l'appareil de commande (1) présente une mémoire d'adresses (30), pour les adresses (31) des abonnés au bus (2, 3, 4), et **en ce que** chaque abonné au bus (2, 3 et 4) comprend un circuit d'identification (32), pour la commande du circuit d'évaluation (10), d'une part, afin de lire le champ de données (20, 21 ou 22) adressé à l'abonné au bus (2, 3 ou 4) dans la trame de données (19) et, d'autre part, pour enregistrer son champ de données (28, 29 ou 30) dans la trame de données (27).
